# EUROPEAN PATENT APPLICATION

(11) **EP 3 163 119 A1**
(43) Date of publication of application: **03.05.2017**
(21) Application number: 15192003.0
(22) Date of filing: 29.10.2015
(51) Int. Cl.: F16G 11/04, B66B 7/08, B66B 7/12

(54) **METHOD, ROPE ARRANGEMENT AND ELEVATOR**

(71) Applicant: KONE Corporation, 00330 Helsinki (FI)
(72) Inventor: Lehtinen, Hannu, 00330 Helsinki (FI)
(74) Representative: Kolster Oy Ab

(57) **Abstract**

The invention relates to a method for providing a rope end block (1) on an end (E) of a coated rope (R), comprising providing a rope (R) comprising one or more elongated load bearing members (2) embedded in a coating (3); and processing an end section (S) of the rope (R), said processing comprising removing from the end section (S) of the rope (R) material of the coating (3) from around said one or more load bearing members (2); and molding a rope end block (1) around the processed end section (S) of the rope (R). One or more electrically conductive connectors (5) can be embedded in the end block (1). The invention relates to a method for manufacturing a rope terminal arrangement, a rope terminal arrangement of an elevator as well as to an elevator.

## Description

### FIELD OF THE INVENTION

The invention relates to a method for providing a rope end block on an end of a coated rope, a method for manufacturing a rope terminal arrangement, a rope terminal arrangement of an elevator, and to an elevator. Said elevator is preferably an elevator for vertically transporting passengers and/or goods.

### BACKGROUND OF THE INVENTION

In elevators, one or more ropes are used as the means by which the load to be hoisted is suspended. Each rope end needs to be fixed to a fixing base, which is typically either the load to be lifted or a stationary structure, depending on the type of suspension chosen for the elevator. The rope ends can be fixed directly to the load, such as the car or counterweight, which is the case when these are to be suspended with 1:1 ratio. Alternatively, the rope ends can be fixed to a stationary structure of the building, which is the case when the car and counterweight are to be suspended with 2:1 ratio, for instance.

Ropes of an elevator typically include one or more load bearing members that are elongated in the longitudinal direction of the rope, each forming a structure that continues unbroken throughout the length of the rope. Load bearing members are the members of the rope which are able to bear together the load exerted on the rope in its longitudinal direction. The load, such as a weight suspended by the rope, causes tension on the load bearing member, which tension can be transmitted by the load bearing member in question all the way from one end of the rope to the other end of the rope. Ropes may further comprise non-bearing components, such as a coating, which cannot transmit tension in the above described way. The coating can be utilized for protection and/or facilitating engagement with rope wheels, for example.

In prior art, elevator ropes have been fixed to the fixing base with various rope terminal arrangements. A rope terminal arrangement has been proposed in US2014/0182975A1, for instance, wherein the rope end is compressed in a gap defined by two compression members. Reliability of this kind of arrangement relies largely on the grip produced by the compression between the rope surface and the compression member. The rope end should be firmly gripped such that it cannot slide out of the compression gap, because this would mean that the suspension of the particular rope would be lost. Therefore, for facilitating safety, it is advantageous to ensure good grip. Likewise, for facilitating safety, it is advantageous to be aware of condition of the condition of ropes. Hence, monitoring of the condition of the load bearing members has been proposed in prior art, such as US2014/0182975A1, where rope condition monitoring is performed by monitoring electrical parameters of the load bearing members. For this purpose, the load bearing members need to be connected electrically to a source of electricity, and in some implementations also to each other. In US2014/0182975A1, it has been proposed to provide a rope end block on an end of the rope. By utilizing the rope end block, one or both of the advantages are facilitated, i.e. ensuring good grip and/or providing a body enabling electrical connection. In prior art, the rope end block has been fixed by screws on the end of the rope. The proposed fixing type is simple but requires multiple components that are to be accurately positioned relative to each other. It can also be relatively difficult to fix a block very firmly on a coated rope by screws. For example, it can be difficult to make the fixing such that it holds in high temperature environment also if the rope coating is thermoplastic.

### BRIEF DESCRIPTION OF THE INVENTION

The object of the invention is to introduce an improved method for providing a rope end block on an end of a coated rope of an elevator, an improved method for manufacturing a rope terminal arrangement, an improved rope terminal arrangement of an elevator as well as an improved elevator. An object is particularly to introduce solutions improved in terms of how a rope end block is provided on an end of a coated rope of an elevator such that many of the drawbacks of the aforementioned current condition monitoring systems and/or of the drawbacks mentioned or implied later in the description, can be eliminated. One object is in particular to provide a solution ensuring a reliable engagement between a coated rope and a rope end block. Another object is in particular to provide a solution, whereby one or more electrical connections at the end of a rope can be realized. Embodiments are presented where one or more of the above objects are realized with simple overall structure, good accuracy and simple process.

It is brought forward a new method for providing a rope end block on an end of a coated rope, the method comprising providing a rope comprising one or more elongated load bearing members embedded in a coating forming the outer surface of the rope; and processing an end section of the rope, said processing comprising removing from the end section of the rope material of the coating, in particular from around said one or more load bearing members; and molding a rope end block around the processed end section of the rope. With this method, one or more of the above mentioned advantages and/or objectives are achieved. In particular, a reliable engagement between a coated rope and a rope end block can be achieved. This is because the processed end section forms a basis on which a rope end block can be provided such that a reduced amount of material of the coating, or even that no coating material at all, is between the rope end block and the load bearing members. Molding ensures that the rope end block gets with excellent coverage into contact with the processed rope end section despite any complexity of the shape of the processed rope end section and the degree in which material of the coating has been removed in said processing. Preferable further details or steps are introduced in the following, which further details or steps can be combined with the method individually or in any combination.

In a preferred embodiment, the rope is a belt-shaped rope, whereby it is larger in its width direction than in its thickness direction.

In a preferred embodiment, the one or more load bearing members extend parallel to the longitudinal direction of the rope unbroken throughout the length of the rope. Thus, they are able to transmit tension with good tensile stiffness.

In a preferred embodiment, in said molding the block is molded around the processed end section of the rope such that the material of the block fills, preferably fully but at least partly, the space freed by removing the material of the coating, thereby replacing the material of the coating removed from the end of the rope with material of the rope end block fully or at least partly.

In a preferred embodiment, said block forms a lump at the end of the rope at least in thickness direction of the rope. Preferably, the block has a larger cross section than the rope at least in thickness direction of the rope. Particularly, it is preferable that the block forms a protrusion on opposite sides of the rope in thickness direction of the rope. Thus, it can be placed to have an obstacle on its both sides against slipping through a thin rope gap delimited by two compression members. Preferably, each protrusion comprises a shoulder. Each shoulder preferably comprises a stop face facing at least substantially in opposite direction than the end faces of the load bearing members, and either in longitudinal direction of the rope or towards the rope flank. Preferably, the angle between the stop face and the longitudinal direction of the rope is either acute or right angle, preferably 20-90 degrees whereby it does not tend to force compression members apart in a rope terminal arrangement but quite the opposite.

In a preferred embodiment, said removing is performed such that material thickness of the coating around one or of the more load bearing members of the end section is at least reduced.

In a preferred embodiment, the end section forms a minority of the length of the rope, the end section preferably being less than 10 cm in length. The majority of the length of the rope is preferably left unprocessed such that no coating material is removed therefrom.

In a preferred embodiment, in said molding the processed end section is molded to be embedded inside the block completely.

In a preferred embodiment, said removing is performed such that openings are formed between adjacent load bearing members. Thus, the subsequent molding will produce a firm mutual engagement between the rope end block and the processed end section. In said molding, the rope end block is molded around the processed end section of the rope such that the material of the block fills the openings formed between adjacent load bearing members.

In a preferred embodiment, said removing is performed such that one or more laterally facing (i.e. crosswise relative to the longitudinal direction) side surface of one or more of said load bearing members is at least partly exposed. To maximize the firmness of the mutual engagement of the components, said removing is performed such that the whole circumference of one or more preferably all of said load bearing members is exposed.

In a preferred embodiment, said is molding is performed such that material of the rope end block is in direct contact with one or more of the load bearing members.

In a preferred embodiment, said removing comprises removing by mechanical treatment, such as carving or cutting (e.g. blade cutting, waterjet cutting or laser cutting) or by any combination of these.

In a preferred embodiment, the coating is made of thermoplastic material and said removing comprises heating said material of the coating that is around said one or more load bearing members such that it softens or melts, and removing the softened or melted material of the coating. The removing the softened or melted material of the coating be preferably performed by suction and/or wiping.

In a preferred embodiment, said molding is injection molding.

In a preferred embodiment, said molding comprises providing a mold around the processed end of the rope. The mold preferably comprises an inside space, forming the molding space of the mold, for receiving the processed end of the rope and the material of the block to be molded around the processed end of the rope, as well as possibly the electrically conductive connectors.

In a preferred embodiment, said molding comprises inserting, such as injecting, hardenable fluid substance, i.e. fluid substance which is hardenable into solid, into the inside space such that it wets the processed end section. Preferably, the fluid substance is self-hardenable into solid or hardenable into solid by treatment. Preferably, the fluid substance is inserted by an injecting means via one or more openings leading into the inside space.

In a preferred embodiment, in said molding one or more electrically conductive connectors are at least partially embedded in material of said block. Thus, with the method one or more electrically conductive connectors can be integrated in the rope end block.

In a preferred embodiment, the method comprises, before the inserting hardenable fluid substance into the inside space of the mold, placing one or more electrically conductive connectors such that they are at least partially accommodated by the inside space of the mold.

In a preferred embodiment, in said placing the one or more electrically conductive connectors are placed such that at least part of the one or more connectors remains outside the inside space. Thus, they can be made to form an interface via which a connection can be established with elements contained in the rope end block.

In a preferred embodiment, in said placing the one or more electrically conductive connectors are placed in contact with one or more of the load bearing members, preferably in contact with the end face(s) of one or more of the load bearing member(s), i.e. the face(s) facing in longitudinal direction of the rope.

In a preferred embodiment, in said placing the one or more electrically conductive connectors are placed to be supported by the mold, preferably by slots comprised therein. The block can then serve as a body for supporting one or more electrically conductive connectors to be electrically coupled with one or more load bearing members of the rope. Preferably, said mold then comprises slots for receiving electrically conductive connectors and for positioning them during the molding relative to each other and relative to the load bearing members.

In a preferred embodiment, said one or more electrically conductive connectors are during the molding positioned by the mold, in particular by the slots thereof, relative to each other and relative to the load bearing members, preferably such that they remain apart from each other.

In a preferred embodiment, said one or more electrically conductive connectors are positioned during the molding by the mold, in particular by slots thereof, relative to the load bearing members such that one or more of the connectors extend into contact with at least one load bearing member at least part of the connector remaining outside the molding space.

In a preferred embodiment, the method comprises placing the rope end such that the end face(s) of the load bearing member(s) are accommodated by the inside space of the mold.

In a preferred embodiment, the method further comprises hardening the hardenable fluid substance into solid. The hardening may comprise hardening by heat treatment, such as heating or cooling. If the fluid substance in question is a two-component substance, which react with each other and thereby practically self-hardening, the hardening may comprise simply giving the hardenable fluid substance time to harden inside the mold. Said fluid substance is preferably glue or resin or any substance containing one or both of these.

It is also brought forward a new method for manufacturing a rope terminal arrangement of an elevator, comprising providing a rope end block on an end of a coated elevator rope according to a method described above, and fixing the end of the coated rope to a fixing base with a fixing means. With this method, one or more of the above mentioned advantages and/or objectives are achieved. In particular, a reliable engagement between a coated elevator rope and a rope end block can be achieved. Preferable further details or steps are introduced earlier above and in the following, which further details or steps can be combined with the method individually or in any combination.

In a preferred embodiment, the method further comprises providing an electrical device, such as a condition monitoring device, and connecting it to an electrical circuit formed at least partially by one or more of said load bearing members and one or more electrically conductive connectors embedded in the end block. Thus, an arrangement can be provided that is able to perform functions that require transmitting electrical voltage/current in the load bearing members, e.g. for condition monitoring purposes. The device could alternatively be some other kind of device requiring electrical contact, such as a means for sending or receiving an electrical data signal via the load bearing member(s) of an elevator rope. Thus, the rope is suitable for serving as a bus for data transfer, e,g. between the car and elevator control.

In a preferred embodiment, said fixing means comprise two compression members having compression faces delimiting a rope gap between them, the compression members being arranged to compress via said compression faces a rope placed in the rope gap for blocking movement of the rope in its longitudinal direction relative to the compression members.

In a preferred embodiment, the rope end block is arranged to form an obstacle or at least a part of an obstacle against slipping of the rope end through the rope gap.

In a preferred embodiment, said fixing comprises placing the rope in the rope gap such that the rope end block is positioned on the end face side of the elevator rope with respect to the compression members. Thus, it can be used to form an obstacle or part of an obstacle against slipping of the rope end through the thin rope gap delimited by the two compression members.

In a preferred embodiment, one or both of the compression members are wedge members. The fixing means preferably further comprises a housing comprising a tapering nest accommodating the wedge members, and the compression members are movable relative to each other such that the gap is narrowed by wedging of the wedge members in the tapering nest, in particular when the wedge members are moved towards the narrow end of the tapering nest.

In a preferred embodiment, the rope end block is arranged to push the wedge members towards the narrow end of the tapering nest if the elevator rope moves in the rope gap towards the narrow end of the tapering nest.

In a preferred embodiment, the rope end block forms a lump at the end of the rope. Thus, it can be provided that the block forms a protrusion on opposite sides of the rope in thickness direction of the rope. Each protrusion then preferably comprises a shoulder that comprises a stop face that is in collision course with a compression member.

In a preferred embodiment, the rope is a belt-shaped rope, whereby it is larger in its width direction than in its thickness direction, and the compression members are arranged to compress the wide sides of the rope, i.e. faces facing in thickness direction of the rope.

In a preferred embodiment, the compression faces of the compression members are parallel and straight such that the rope compressed by them will not be bent into a curved form. This provides that the rope can be fixed without bending it, which would be disadvantageous if the rope has rigid and/or brittle elements, such as load bearing members made of composite material.

It is also brought forward a new rope terminal arrangement of an elevator, comprising an end of a coated rope comprising one or more elongated load bearing members embedded in a coating, the rope comprising an end section, and a main section, the main section forming the majority of the length of the rope, and the end section having either no material of the coating around said one or more load bearing members or at least substantially smaller thickness of material of the coating around said one or more load bearing members than the main section; and a rope end block molded around the end section of the rope; and a fixing means fixing the end of the rope to a fixing base. With this arrangement, one or more of the above mentioned advantages and/or objectives are achieved. In particular, a reliable engagement between a coated elevator rope and a rope end block can be achieved. Preferable further structural details or details of manufacturing are introduced earlier above and in the following, which further details can be combined with the rope terminal arrangement individually or in any combination.

In a preferred embodiment, the rope terminal arrangement has been obtained with the method described above.

In a preferred embodiment, the average material thickness of the coating around the one or more load bearing members of the end section is at least substantially smaller than that of the main portion.

In a preferred embodiment, the rope end block is in direct contact with one or more of the load bearing members.

In a preferred embodiment, the rope end block is molded around the end section of the rope by injection molding.

In a preferred embodiment, the rope terminal arrangement comprises an electrical device, such as a condition monitoring device, connected to an electrical circuit formed at least partially by one or more of said load bearing members and one or more electrically conductive connectors at least partially embedded in the rope end block.

In a preferred embodiment, said fixing means comprise two compression members having compression faces delimiting a rope gap between them, the compression members being arranged to compress via said compression faces the rope, in particular the main section thereof, placed in the rope gap for blocking movement of the rope in its longitudinal direction relative to the compression members.

In a preferred embodiment, the rope end block is arranged to form an obstacle or at least a part of an obstacle against slipping through the rope gap.

In a preferred embodiment, the rope is placed in the rope gap such that the rope end block is positioned on the end face side of the elevator rope with respect to the compression members.

In a preferred embodiment, one or both of the compression members are wedge members, and the fixing means comprises a housing comprising a tapering nest accommodating the wedge members, and the compression members are movable relative to each other such that the gap is narrowed by wedging of the wedge members in the tapering nest, in particular when the wedge members are moved towards the narrow end of the tapering nest.

In a preferred embodiment, the rope end block is arranged to push the wedge members towards the narrow end of the tapering nest if the elevator rope moves in the rope gap towards the narrow end of the tapering nest.

In a preferred embodiment, the rope end block forms a lump at the end of the rope.

In a preferred embodiment, the compression faces of the compression members are parallel and straight such that the rope compressed by them will not be bent into a curved form.

In a preferred embodiment, the rope is a belt-shaped rope, whereby it is larger in its width direction than in its thickness direction, and the compression members are arranged to compress the wide sides of the rope, i.e. faces facing in thickness direction of the rope.

It is also brought forward a new elevator, which comprises a rope terminal arrangement as described above, the rope terminal arrangement fixing an end of a coated rope of the elevator to a fixing base. Preferably, the elevator further comprises a hoistway; one or more elevator units vertically movable in the hoistway, including at least an elevator car. Preferably, the rope is arranged to suspend one or more of said elevator units, including at least an elevator car. Said fixing base is preferably one of the elevator units or a stationary structure of the building wherein the elevator is installed.

In a preferred embodiment, the load bearing members are made of composite material comprising reinforcing fibers embedded in polymer matrix, said reinforcing fibers preferably being carbon fibers.

In a preferred embodiment, the reinforcing fibers of each load bearing member are at least substantially evenly distributed in the polymer matrix of the load bearing member in question. Furthermore, preferably, over 50% of the cross-sectional square area of the load bearing member consists of said reinforcing fibers. Thereby, a high tensile stiffness can be facilitated. Preferably, the load bearing members cover together at least a 25-75% proportion of the cross-section of the rope, most preferably over 50% proportion of the cross-section of the rope.

In a preferred embodiment, the reinforcing fibers are not twisted together. Instead, it is preferable that substantially all the reinforcing fibers of each load bearing member are parallel with the longitudinal direction of the load bearing member. Thereby the fibers are also parallel with the longitudinal direction of the rope as each load bearing member is oriented parallel with the longitudinal direction of the rope. This facilitates further the longitudinal stiffness of the rope.

In a preferred embodiment, the width/thickness ratio of the rope is more than two, preferably more than 4.

The elevator is preferably such that the car thereof is arranged to serve two or more landings. The elevator preferably controls movement of the car in response to signals from user interfaces located at landing(s) and/or inside the car so as to serve persons on the landing(s) and/or inside the elevator car. Preferably, the car has an interior space suitable for receiving a passenger or passengers, and the car can be provided with a door for forming a closed interior space.

### BRIEF DESCRIPTION OF THE DRAWINGS

In the following, the present invention will be described in more detail by way of example and with reference to the attached drawings, in which
Figure 1 illustrates an end of a coated belt-shaped rope on which a rope end block is to be provided.
Figure 2 illustrates cross section A-A of Figure 1.
Figure 3 illustrates the rope end of Figure 1 when material of coating has been removed from an end section thereof.
Figure 4 illustrates the rope end of Figure 3 when a mold has been placed around the processed end section thereof.
Figure 5 illustrates molding a rope end block around the processed end section of the rope end.
Figure 6 illustrates the rope with a rope end block provided on the end thereof.
Figure 7 illustrates preferable details of the mold.
Figure 8 illustrates preferable details of the mold.
Figure 9 illustrates a rope terminal arrangement according to the invention.
Figure 10 illustrates cross section B-B of Figure 9.
Figure 11 illustrates a first embodiment of an elevator implementing the rope terminal arrangement according to the invention.
Figure 12 illustrates a second embodiment of an elevator implementing the rope terminal arrangement according to the invention.
Figures 13 and 14 illustrate preferred details of the load bearing member of the rope. The foregoing aspects, features and advantages of the invention will be apparent from the drawings and the detailed description related thereto.

### DETAILED DESCRIPTION

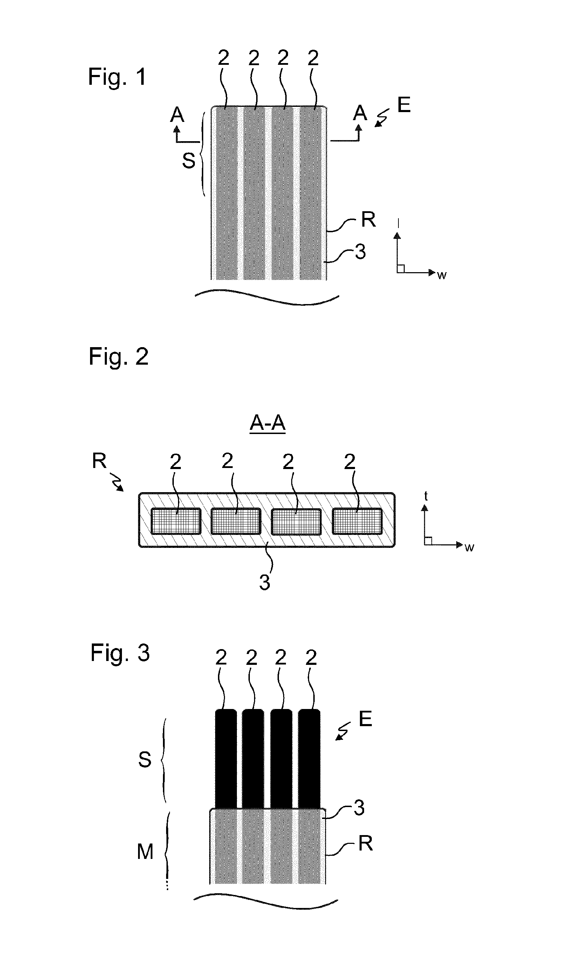

Figure 1 illustrates preferred phases of a method or providing a rope end block on an end of a coated rope. In the method according to the invention, a rope end block 1 is provided on an end E of a coated rope R. The method comprises providing a rope R comprising one or more elongated load bearing members 2 embedded in a coating 3, which one or more elongated load bearing members 2 extend parallel to the longitudinal direction of the rope R unbroken throughout the length of the rope R. Figures 1 and 2 illustrate structure of the rope R. The load bearing members 2 are embedded in the coating 3 that the material of the coating 3 surrounds said one or more load bearing members 2. The coating 3 is preferably made of polymer material and forms the outer surface of the rope 1.

The method comprises processing an end section S of the end E of the rope R. Said processing comprises removing from the end section S of the rope R material of the coating 3, in particular from around said load bearing members 2. Said removing is performed such that material thickness of the coating 3 around the one or more load bearing members 2 of the end section S is at least reduced. Thus, the processed end section S forms a basis on which a rope end block 1 can be provided such that a reduced amount of material of the coating 3, or even that no coating material at all, is between the rope end block 1 and the load bearing members 2. Said processing is performed as far as possible without damaging the load bearing members 2. The intention of said removing is in particular to prepare the rope end section S such that a block forming a rope end block 1, can be molded on the rope end section S such that good engagement between the rope end section S and the rope end block 1 is achieved. Said processing is performed only for a short section of the rope R. The end section S forms a minority of the length of the rope, preferably being less than 10 cm in length. The majority of the length of the rope R is left unprocessed such that no material of the coating 3 is removed therefrom.

Figure 3 illustrates the processed end section S of the rope R after said processing. In this case, said removing is performed such that laterally facing side surfaces (i.e. surface of a side facing crosswise relative to the longitudinal direction) of the load bearing members 2 are exposed. Exposure provides that material of the rope end block 1 to be provided on the processed end section S will be in direct contact with the exposed areas of the load bearing members 2. Thereby they get to be directly engaged with each other. Thus, between the exposed areas of the load bearing members 2 and the rope end block 1 there are no substance of the coating 3 that could weaken the engagement as it might be the case should the engagement be indirectly realized via the coating 3. For example, elasticity of the coating 3, poor bonding ability of the coating 3 or thermoplasticity of the coating 3 could in some environment have weakening influence on the firmness of the engagement. To maximize the contact area between the load bearing members 2 and the rope end block 1 later provided on the processed end section S, it is preferable that said removing is performed such that the whole circumference of each load bearing member 2 is exposed, as illustrated in Figure 3.

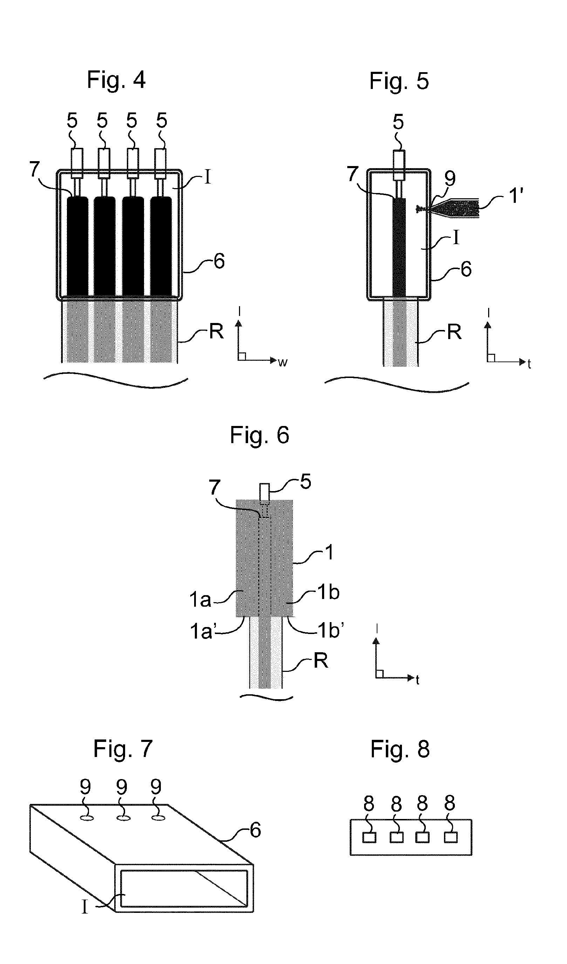

After said processing, the method comprises molding a rope end block 1 around the processed end section S of the rope R, in particular around the one or more elongated load bearing members 2 of the processed rope end section S. The molding is thus performed such that the load bearing members of the processed end section S are contained inside the block 1. Molding ensures that the rope end block 1 gets with excellent coverage into contact with the processed rope end section S despite complexity of the shape of the processed rope end section S and degree in which material of the coating 3 has been removed in said processing. Thus, a large contact area can be achieved, which facilitates firmness of the engagement. Molding also provides that not only mechanical connection but also chemical bonding, is achieved between the rope end block and the processed rope end section S, which facilitates firmness of the engagement. Preferred details of the molding are described later in context of description of Figures 4 and 5.

In the following, preferred aspects and features of the rope R are described referring to Figures 1 and 2. With the coating 3, the rope R is provided with a surface via which the rope R can effectively engage frictionally with a drive wheel of an elevator, for instance. Also, hereby the friction properties and/or other surface properties of the rope are adjustable, independently of the load bearing function, such that the rope perform wells in the intended use, for instance in terms of traction for transmitting force in longitudinal direction of the rope so as to move the rope with a drive wheel. Furthermore, the load bearing members 2 embedded therein are thus provided with protection. The coating 3 is preferably elastic, such as made of polyurethane. Elastic material, and particularly polyurethane provides the rope R good frictional properties and wear resistance. Polyurethane is in general well suitable for elevator use, but also materials such as rubber or equivalent elastic materials are suitable for the material of the coating 3.

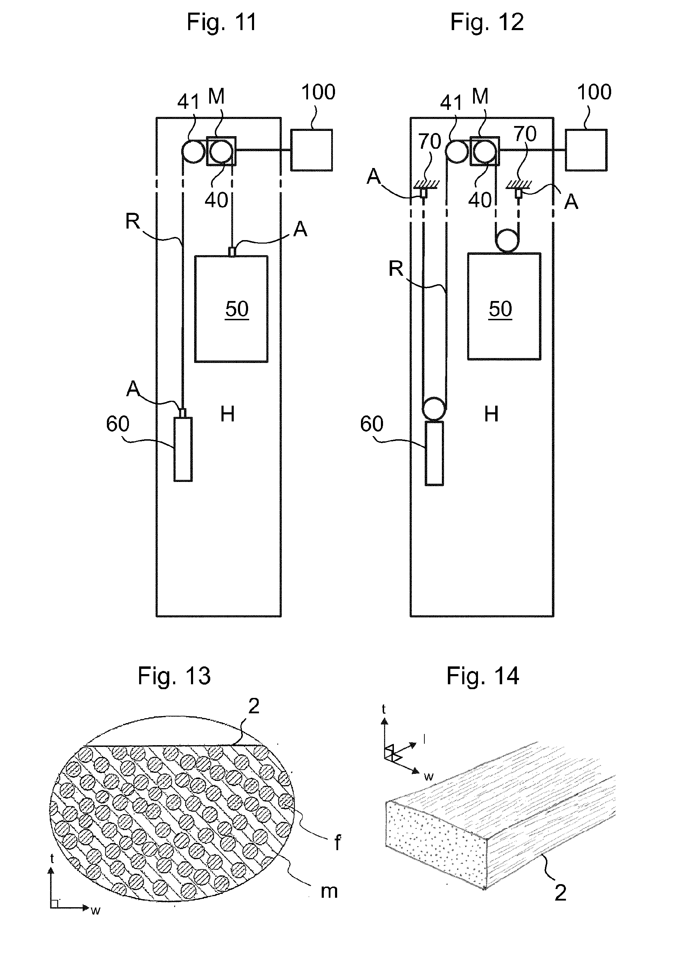

Said one or more load bearing members 2 is/are preferably, but not necessarily, made of composite material comprising reinforcing fibers f embedded in polymer matrix m, said reinforcing fibers preferably being carbon fibers. With this kind of structure, the rope R has advantageous properties in elevator use, such as light weight and good tensile stiffness in longitudinal direction. The load bearing members of this kind are however relatively brittle and difficult to be engaged firmly by a rope end block or electrical connection members. For example using a screw connection is difficult without damaging the load bearing members 2. Also, the coating 3 does not form an adequately firm base for a rope end block. For this reason, the solution brought forward is particularly advantageous in connection with a rope having this kind of structure. Preferred further details of the load bearing members 2 are described referring to Figures 13 and 14.

The rope R is belt-shaped, whereby it is substantially larger in its width direction w than in its thickness direction t. The rope being belt-shaped, it has two opposite wide sides S1,S2 facing in thickness direction t of the rope R. These wide sides S1,S2 can be engaged firmly with compression members of a rope terminal arrangement. This provides that the rope can be fixed firmly also without bending it, which would be disadvantageous if the rope has rigid and/or brittle elements. The width/thickness ratio of the rope 1 is preferably at least 2 more preferably at least 4, or even more. In this way a large cross-sectional area for the rope R is achieved, the bending capacity around the width-directional axis being favorable also with rigid materials of the load bearing member, such as composite material. Thereby, the rope R suits very well to be used in hoisting appliances, in particular in elevators, wherein the rope 1 needs to be guided around rope wheels. Also, it is preferable that the load bearing members 2 are wide. Accordingly, each of said one or more load bearing members 2 is preferably larger in its width direction w than in its thickness direction t of the rope 2. Particularly, the width/thickness ratio of each of said one or more load bearing members is preferably more than 2. Thereby, the bending resistance of the rope is small but the load bearing total cross sectional area is vast with minimal non-bearing areas.

In the embodiment illustrated, there are plurality of the load bearing members 2, which are adjacent each other in width direction w of the rope R. In the present case, there are particularly four of said load bearing members embedded in said elastic coating 3, but the rope 1 could alternatively have any other number of load bearing members 2, such as only one load bearing member 2 wide in width direction of the rope R, or any other number e.g. a number from 2 to 10.

Preferred details of the molding are illustrated in Figures 4 to 8. In the molding, the processed end section S is molded to be embedded inside the block 1. The molding is performed such that a chemical bond between the rope end block 1 and the processed section S is formed. The method is preferably injection molding. As illustrated, the method comprises providing a mold 6 around the processed end section S of the rope R, of course leaving majority of the length of the rope R outside the mold 6. The mold 6 comprises an inside space I, which forms the molding space of the mold, for receiving the processed end of the rope R and hardenable fluid substance 1', i.e. the in fluid-formig material of the rope end block 1 to be molded around the processed end section S of the rope R, as well as any other optional components to be integrated with the rope end block, such as one or more electrically conductive connectors 5, as presented in Figure 4. After the processed end section S is within said mold 6, said molding comprises inserting (e.g.injecting) fluid substance 1' into the inside space I and thereby to wet the processed end section S of the rope R. The fluid 1' and thereby the material of the rope end block 1 fills the space freed by removing the material of the coating 3 thereby replacing the material of the coating 3 removed from the end of the rope R with material of the rope end block 1. The hardenable fluid substance 1' is hardenable into solid. It is preferably either self-hardenable into solid or hardenable into solid by treatment, such as by heat treatment or radiation treatment or cooling the fluid in case it is in melted form. At least in the field of polymer technology there are numerous alternatives for the fluid substance 1' hardenable into solid. Basically, the material could be any polymer material that can be molded e.g. by injection molding. The hardenable fluid substance 1' can be glue or resin, for example. As for its type, it can be one-component substance or two-component substance. The independence on temperature fixing can be facilitated simply by choosing the material appropriately such that it does not melt or soften in high temperature. Most preferably, the hardenable fluid substance 1' is such that the rope end block 1 molded, is not thermoplastic once it is hardened. Thus, it stays firmly engaged with the processed rope end section S also in case of fire. To achieve this, the fluid 1' substance hardenable into solid can be some thermosetting polymer material, for example. The mold 6 is preferably such that it comprises one or more openings 9 leading into the inside space I. Said molding is performed in the preferred embodiment illustrated in Figure 5 by an injecting means 11 via one or more openings 9 of the mold 6 leading into the inside space I of the mold 6. The mold 6 is preferably further such that the inside space I thereof is larger than the rope R in thickness direction of the rope R. Thus, the rope end block 1 produced by molding will form a lump at the end of the rope R, which has a larger cross section than the rope R at least in thickness direction of the rope R. The rope end block 1 forming a lump provides that it can increase safety of a rope terminal arrangement where the rope R is engaged by compression members compressing sides of the rope facing in thickness direction t of the rope R.

Figure 6 illustrates the rope R provided with a rope end block 1 by the method. The rope end block 1 forms a lump at the end of the rope R, which has a larger cross section than the rope R in thickness direction t of the rope R. The block forms here a protrusion 1a,1b on opposite sides of the rope in thickness direction w of the rope. Each protrusion 1a,1b comprises a shoulder. Each shoulder comprises a stop face 1a',1b' facing at least substantially in opposite direction than the end faces 7 of the load bearing members 2, either in longitudinal direction of the rope or at an angle towards the rope flank. The angle between the stop face 1b' and the longitudinal direction of the rope R is preferably acute or right angle, preferably 20-90 degrees whereby it does not tend to force compression members apart in a rope terminal arrangement utilizing this kind of fixing means.

Said removing from the end section S of the rope R material of the coating 3 can be carried out by any suitable process for machining objects. Said removing may comprise removing by mechanical treatment, such as carving, blade cutting, waterjet cutting or alternatively by laser cutting or by any combination of these. When the coating 3 is made of thermoplastic material, said removing may alternatively comprise heating said material of the coating 3 around said one or more load bearing members 2 such that it softens or melts, and removing the softened or melted material of the coating 3. The softened or melted material of the coating 3 can be removed then by suction, wiping or carving, blade cutting, waterjet cutting or alternatively by laser cutting or by any combination of these.

So as to embed the processed end section S of the rope in the rope end block 1 thoroughly, the method preferably comprises placing the rope end E particularly such that the end faces 7 of the load bearing members 2 are accommodated by the inside space I of the mold 6.

The method may further comprise integrating one or more electrically conductive connectors 5 in the rope end block 1. Then, said molding further comprises embedding one or more electrically conductive connectors 5 at least partially in material of said rope end block 1. This has been illustrated in Figures 4 and 5. Here, the method comprises placing one or more electrically conductive connectors 5 such that they are at least partially accommodated by the inside space I of the mold. In the presented case, the electrically conductive connectors 5 are intended to form an interface for external connectors, such as connectors whereto a negative or positive terminal of a source of electricity of an electrical device can be coupled. For this reason, in the presented embodiment, in said placing the one or more electrically conductive connectors 5 are placed such that at least part of the one or more connectors 5 remains outside the inside space I. Should the electrically conductive connectors 5 be intended for connecting conductively load bearing members 2 to each other without forming interface for external connectors, the electrically conductive connectors 5 can be placed such that they are completely accommodated by the inside space I of the mold. In said placing the one or more electrically conductive connectors 5 are placed in contact with one or more of the load bearing members 2, most preferably in contact with the end face(s) 7 of the load bearing member(s) (i.e. the face(s) facing in longitudinal direction of the rope). Thus, a clean contact face can be utilized, but also the lateral side area for the purpose of contacting the rope end block can be saved, thereby maximizing the contact area that most efficiently facilitates firm engagement. It is preferable, although not necessary, that the mold serves additionally as a jig that can place the electrically conductive connectors 5 accurately relative to each other and/or the load bearing members. In the method the one or more electrically conductive connectors 5 are placed to be supported by the mold 6, preferably by slots 8 comprised therein. For this reason, it is preferably that said mold comprises slots 8 for receiving electrically conductive connectors 5 and positioning them during the molding relative to each other, as well as relative to the load bearing members 2. In the presented case, said one or more electrically conductive connectors 5 are during the molding positioned by the mold 6, in particular by the slots 8 thereof, relative to each other such that they remain apart from each other in width direction of the rope R.

In the presented case, said one or more electrically conductive connectors are positioned during the molding by the mold, in particular by the slots 8 thereof, also relative to the load bearing members such that the connector extends into contact with at least one load bearing member and at least part of the connector remains outside the molding space. The slots 8 are visible in Figures 4, 5 and 8.

When utilized for integrating one or more electrically conductive connectors 5 in the rope end block 1, it becomes a body for supporting one or more electrically conductive connectors 5 to be electrically coupled with one or more load bearing members of the rope R. Then, at least some of the one or more electrically conductive connectors connect electrically conductively two or more load bearing members to each other. Additionally or alternatively, at least some of the one or more electrically conductive connectors forms an electrical interface to which an external connector, e.g. a negative or positive terminal of a source of electricity, can be coupled, as already earlier above shortly mentioned.

The above described integrating one or more electrically conductive connectors 5 in the rope end block 1 is not necessary, as the method may be directed to providing other advantages, such as advantages related to interplay with the compressing members of a rope terminal arrangement A by which the rope R is to be fixed.

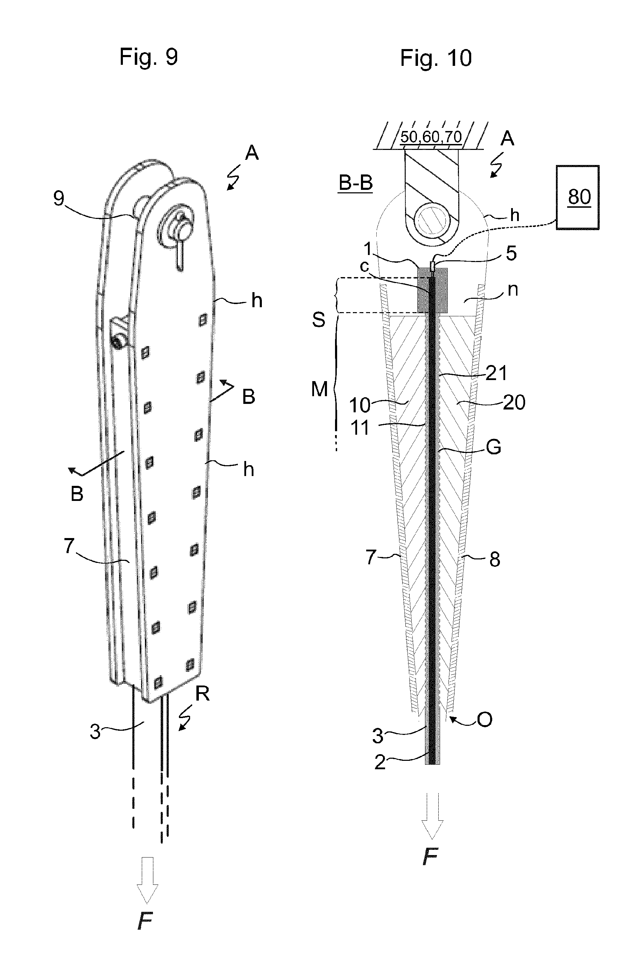

In a method for manufacturing a rope terminal arrangement A of an elevator according to the invention, a rope end block 1 is provided on an end E of a coated rope R in accordance with what is described above. Thereafter, the end E of the rope R is fixed to a fixing base, such as to an elevator car 50 or to a counterweight 60 or to a stationary structure 70 of a building, with a fixing means h,10,20. Figures 9 and 10 illustrate preferred structure of the rope terminal arrangement A.

The rope terminal arrangement A according to the invention comprises an end E of a coated rope R, which rope R comprises one or more elongated load bearing members 2 embedded in a coating 3. The rope R comprises an end section S, processed as described earlier above and forming part of the end E or the rope R, as well as a main section M. The main section M forms the majority of the length of the rope R. The end section S has been processed either to have no material of the coating 3 around said one or more load bearing members 2 or to have at least substantially smaller thickness of material of the coating 3 around said one or more load bearing members 2 than the main section M. The rope terminal arrangement A further comprises a rope end block 1 molded around the end section S of the rope R, and a fixing means h,10,20 fixing the end E of the rope R to a fixing base 50,60,70. In general, it is preferable that the average material thickness of the coating 3 around the one or more load bearing members 2 of the end section S is at least substantially smaller than that of the main portion M. This can be realized through removing material from the end section S as described elsewhere above. In the illustrated case, the rope end block 1 is in direct contact with one or more of the load bearing members 2.

In the preferred embodiment, said fixing means h,10,20 comprises two compression members 10,20 having compression faces 11,21 delimiting a rope gap G between them. The compression members 10,20 are arranged to compress via said compression faces 11,21 the rope R placed in the rope gap G for blocking movement of the rope in its longitudinal direction relative to the compression members 10,20. Preferably, one or both of the compression members 10,20 are wedge members. In the preferred embodiment, both of the compression members 10,20 are wedge members. The fixing means h,10,20 comprises a housing h comprising a tapering nest n accommodating the wedge members 10,20, and the compression members 10,20 are movable relative to each other such that the gap G is narrowed by wedging of the compression members 10,20 in the tapering nest, in particular against internal wedge surfaces of the housing h when moved along the wedge surface of the housing h towards the narrower end of the tapering nest n. The tapering nest has a narrow end and a wide end, the narrow end being narrower than the wide end. The narrow end comprises an opening via which the rope R passes.

Said fixing comprises placing the rope R in the rope gap G. This is performed such that the rope end block 1 becomes positioned on the end face 7 side of the elevator rope R with respect to the compression members 10,20. Thus, the rope end block 1 is arranged to form an obstacle against slipping of the rope end E through the rope gap G. The rope end block 1 can be made to carry or have additional components attached thereon for facilitating said formation of an obstacle against said slipping. The rope end block 1 is arranged to push the wedge members 10,20 towards the narrow end of the tapering nest if the elevator rope R moves, such as slips, in the rope gap G towards the narrow end of the tapering nest n. Consequently, the wedge members 10,20 are wedged more tightly between said rope R and said housing h, thus locking said elevator rope R more tightly in the rope gap G. Thus, the rope end block 1 forms a safety means for the rope terminal arrangement A, preventing the rope R from slipping away from the rope gap G. To enable said pushing, in the preferred embodiment, the rope end block 1 forms a lump at the end of the rope R.

In the preferred embodiment, the rope R is placed in the rope gap G such that the rope end block 1 is left outside the rope gap G delimited by the compression faces 11,21 of the compression members 10,20. Thus, it is an element that does not delimit said rope gap G.

The rope R is arranged to suspend a load 50,60, whereby it has a tensioned rope portion passing to the rope terminal arrangement A via the opening O of the tapering nest n. The rope end block 1 is positioned on opposite side with respect to the compression members 10,20 than the tensioned rope portion. The tensioned rope portion is in Figures 9 and 10 the rope portion extending downwards from the arrangement A.

The rope end block 1 is preferably further such that it forms protrusions 1a,1b on opposite sides of the rope R in thickness direction w of the rope R, as illustrated in Figure 6. Each protrusion 1a,1b comprises a shoulder that comprises a stop face 1a',1b' facing at least substantially in longitudinal direction l of the rope R and away from the end face 7 of the rope R, each said stop face being in collision course with a compression member 10,20.

In the preferred embodiment illustrated, the rope R is a belt-shaped, whereby it is larger in its width direction w than in its thickness direction t, and the compression members 10,20 are arranged to compress the wide sides S1,S2 of the rope, i.e. faces facing in thickness direction t of the rope R. The compression faces 11,21 of the compression members 10,20 are parallel and straight such that the rope R compressed by them will not be bent into a curved form. This provides that the rope can be fixed without bending it, which would be disadvantageous if the rope has rigid and/or brittle elements, such as load bearing members 2 made of composite material. The compression faces 11,21 of the compression members 10,20 are preferably furthermore planar, whereby they can firmly engage to a planar wide side S1,S2 of the rope R. The planar faces/sides of course can each have a surface pattern, if preferred e.g. for facilitating their mutual grip or for facilitating some other elevator function, such as rope engagement with a drive sheave.

As above described, the rope end block 1 can form a safety means for the rope terminal arrangement A preventing its slipping away from the rope gap G. Additionally or alternatively, the rope end block 1 can contribute for providing electrical connections at the end of a rope R. In this case, the method comprises providing an electrical device 80, such as a condition monitoring device 80, and connecting it to an electrical circuit c formed at least partially by one or more of said load bearing members 2 and one or more electrically conductive connectors 5 embedded in the end block 1. The method may comprise coupling a negative or positive terminal of a source of electricity of an electrical device, such as a condition monitoring device 80, to one or more electrically conductive connectors 5 at least partially embedded in material of said the rope end block 1. Thus, an elevator arrangement A can be provided that is able to perform functions that require transmitting electrical current in the load bearing members 2, e.g. for condition monitoring purposes.

Figures 11 and 12 illustrate preferred embodiments of the elevator. The elevator comprises a hoistway H and elevator units 50,60 vertically movable in the hoistway H. The elevator units 50,60 include in this case an elevator car 50 and a counterweight 60. In both embodiments, the elevator further comprises one or more ropes R, each being connected with said elevator units 50, 60 and having two ends, each end being fixed to a fixing base 50,60,70. Each said rope R suspends the elevator units 50,60 whereto it is connected. Accordingly, the rope R is in this case a suspension rope R of the elevator. Said elevators differ from each other in terms of their suspension ratios, i.e. how the ropes have been connected with the elevator units 50,60. In the embodiment of Figure 11, the fixing base is for one end of the rope R the elevator unit 50 and for the other end the elevator unit 60. In the embodiment of Figure 12, on the other hand, the fixing base is for both ends of the rope R a stationary structure 70 of the building wherein the elevator is installed. Each of said rope ends are fixed with a rope terminal arrangement A to its fixing base 50,60,70. The rope terminal arrangement A is as described elsewhere in the application.

The elevator illustrated in each of Figures 11 and 12 is more specifically such that it comprises one or more upper rope wheels 40,41 mounted higher than the car 50 and the counterweight 60, in this case particularly in proximity of the upper end of the hoistway H. In this case there are two of said rope wheels 40,41 but the elevator could be implemented also with some other number of rope wheels.

Each of said one or more hoisting ropes R is belt-shaped and passes around the one or more rope wheels 40,41 the wide side thereof, i.e. the side facing in thickness direction t of the rope R, resting against the rope wheel 40,41. Each rope R passes around the one or more rope wheels 40,41 turning around an axis extending in width direction w of the hoisting rope R. In this case the one or more rope wheels 40,41 are mounted inside the upper end of the hoistway, but alternatively they could be mounted inside a space beside or above the upper end of the hoistway H. Said one or more rope wheels 40,41 comprise a drive wheel 40 engaging said one or more hoisting ropes R and the elevator comprises a motor M for rotating the drive wheel 40. The elevator car 50 can be moved by rotating the drive wheel 40 engaging each of said ropes R. The elevator further comprises an elevator control unit 100 for automatically controlling rotation of the motor M, whereby the movement of the car 50 is also made automatically controllable.

Figure 13 illustrates a preferred inner structure for said load bearing member 2, showing inside the circle an enlarged view of the cross section of the load bearing member 2 close to the surface thereof, as viewed in the longitudinal direction l of the load bearing member 2. The parts of the load bearing member 2 not showed in Figure 13 have a similar structure. Figure 14 illustrates the load bearing member 2 three dimensionally. The load bearing member 2 is made of composite material comprising reinforcing fibers f embedded in polymer matrix m. The reinforcing fibers f are more specifically distributed at least substantially evenly in polymer matrix m and bound to each other by the polymer matrix. This has been done e.g. in the manufacturing phase by immersing them together in the fluid material of the polymer matrix which is thereafter solidified. The load bearing member 2 formed is a solid elongated rod-like one-piece structure. Said reinforcing fibers f are most preferably carbon fibers, but alternatively they can be glass fibers, or possibly some other fibers. Preferably, substantially all the reinforcing fibers f of each load bearing member 2 are parallel with the longitudinal direction of the load bearing member 2. Thereby, the fibers f are also parallel with the longitudinal direction of the rope R as each load bearing member 2 is oriented parallel with the longitudinal direction of the rope R. This is advantageous for the rigidity as well as behavior in bending. Owing to the parallel structure, the fibers in the rope R will be aligned with the force when the rope R is pulled, which ensures that the structure provides high tensile stiffness. The fibers f used in the preferred embodiments are accordingly substantially untwisted in relation to each other, which provides them said orientation parallel with the longitudinal direction of the rope R. This is in contrast to the conventionally twisted elevator ropes, where the wires or fibers are strongly twisted and have normally a twisting angle from 15 up to 40 degrees, the fiber/wire bundles of these conventionally twisted elevator ropes thereby having the potential for transforming towards a straighter configuration under tension, which provides these ropes a high elongation under tension as well as leads to an unintegral structure. The reinforcing fibers f are preferably long continuous fibers in the longitudinal direction of the load bearing member 2, preferably continuing for the whole length of the load bearing member 2.

The reinforcing fibers f are preferably distributed in the aforementioned load bearing member 2 at least substantially evenly. The fibers f are then arranged so that the load bearing member 2 would be as homogeneous as possible in the transverse direction thereof. An advantage of the structure presented is that the matrix m surrounding the reinforcing fibers f keeps the interpositioning of the reinforcing fibers f substantially unchanged. It equalizes with its slight elasticity the distribution of force exerted on the fibers, reduces fiber-fiber contacts and internal wear of the rope, thus improving the service life of the rope R. Owing to the even distribution, the fiber density in the cross-section of the load bearing member 2 is substantially constant. The composite matrix m, into which the individual fibers f are distributed, is most preferably made of epoxy, which has good adhesiveness to the reinforcement fibers f and which is known to behave advantageously with reinforcing fibers such as carbon fiber particularly. Alternatively, e.g. polyester or vinyl ester can be used, but any other suitable alternative materials can be used.

The matrix m has been applied on the fibers f such that a chemical bond exists between each individual reinforcing fiber f and the matrix m. Thereby a uniform structure is achieved. To improve the chemical adhesion of the reinforcing fiber to the matrix m, in particular to strengthen the chemical bond between the reinforcing fiber f and the matrix m, each fiber can have a thin coating, e.g. a primer (not presented) on the actual fiber structure between the reinforcing fiber structure and the polymer matrix m. However, this kind of thin coating is not necessary. The properties of the polymer matrix m can also be optimized as it is common in polymer technology. For example, the matrix m can comprise a base polymer material (e.g. epoxy) as well as additives, which fine-tune the properties of the base polymer such that the properties of the matrix are optimized. The polymer matrix m is preferably of a hard non-elastomer, such as said epoxy, as in this case a risk of buckling can be reduced for instance. However, the polymer matrix need not be non-elastomer necessarily, e.g. if the downsides of this kind of material are deemed acceptable or irrelevant for the intended use. In that case, the polymer matrix m can be made of elastomer material such as polyurethane or rubber for instance.

As above mentioned, the matrix m of the load bearing member 2 is most preferably hard in its material properties. A hard matrix m helps to support the reinforcing fibers f, especially when the rope bends, preventing buckling of the reinforcing fibers f of the bent rope, because the hard material supports the fibers f efficiently. To reduce the buckling and to facilitate a small bending radius of the load bearing member 2, among other things, it is therefore preferred that the polymer matrix m is hard, and in particular non-elastomeric. The most preferred materials for the matrix are epoxy resin, polyester, phenolic plastic or vinyl ester. The polymer matrix m is preferably so hard that its module of elasticity (E) is over 2 GPa, most preferably over 2.5 GPa. In this case the module of elasticity E is preferably in the range 2.5-10 GPa, most preferably in the range 2.5-4.5 GPa. There are commercially available various material alternatives for the matrix m which can provide these material properties. Preferably over 50% proportion of the surface area of the cross-section of the load bearing member 2 is of the aforementioned reinforcing fiber, preferably such that 50%-80% proportion is of the aforementioned reinforcing fiber, more preferably such that 55%-70% proportion is of the aforementioned reinforcing fiber, and substantially all the remaining surface area is of polymer matrix m. Most preferably, this is carried out such that approx. 60% of the surface area is of reinforcing fiber and approx. 40% is of matrix material (preferably epoxy material). In this way a good longitudinal stiffness for the load bearing member 2 is achieved. As mentioned carbon fiber is the most preferred fiber to be used as said reinforcing fiber due to its excellent properties in hoisting appliances, particularly in elevators. However, this is not necessary as alternative fibers could be used, such as glass fiber, which has been found to be suitable for the hoisting ropes as well. The load bearing members 2 are preferably each completely non-metallic, i.e. made not to comprise metal.

In the illustrated embodiments, the load bearing members 2 are substantially rectangular and larger in width direction than thickness direction. However, this is not necessary as alternative shapes could be used. Likewise, it is not necessary that the number of the load bearing members is four which is used for the purpose of the example. The number of the load bearing members 2 can be greater or smaller. The number can be one, two or three for instance, in which cases it may be preferably to shape it/them wider than what is shown in Figures.

The rope R is preferably furthermore such that the aforementioned load bearing member 2 or a plurality of load bearing members 2, comprised in the rope R, together cover majority, preferably 70% or over, more preferably 75% or over, most preferably 80% or over, most preferably 85% or over, of the width of the cross-section of the rope R for essentially the whole length of the rope R. Thus the supporting capacity of the rope R with respect to its total lateral dimensions is good, and the rope R does not need to be formed to be thick.

In the preferred embodiments, an advantageous structure for the rope R has been disclosed. However, the invention can be utilized with also other kind of ropes such as with other kinds of belt-shaped ropes having different materials. Also, the outer shape of the rope R could be contoured otherwise than disclosed, such as to have a polyvee shape or toothed shape.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A method for providing a rope end block (1) on an end (E) of a coated rope (R), comprising
providing a rope (R) comprising one or more elongated load bearing members (2) embedded in a coating (3); and
processing an end section (S) of the rope (R), said processing comprising removing material of the coating (3) from around said one or more load bearing members (2); and
molding a rope end block (1) around the processed end section (S) of the rope (R).

2. A method according to any of the preceding claims, wherein the rope (R) is a belt-shaped rope, whereby it is larger in its width direction (w) than in its thickness direction (t).

3. A method according to any of the preceding claims, wherein in said molding the block (1) is molded around the processed end section (S) of the rope (R) such that the material of the block (1) at least partly fills the space freed by removing the material of the coating (3).

4. A method according to any of the preceding claims, wherein said block forms a lump at the end of the rope (R).

5. A method according to any of the preceding claims, wherein said removing is performed such that material thickness of the coating (3) around one or more of the load bearing members (2) of the end section (S) is at least reduced.

6. A method according to any of the preceding claims, wherein said removing is performed such that one or more laterally facing side surfaces of one or more of said load bearing members (2) is at least partly exposed.

7. A method according to any of the preceding claims, wherein in said molding the rope end block (1) is molded from fluid substance (10) hardenable into solid.

8. A method according to any of the preceding claims, wherein said molding is injection molding.

9. A method according to any of the preceding claims, wherein said molding comprises providing a mold (6) around the processed end of the rope (R), and inserting into the inside space (I) fluid substance (10), which is hardenable into solid, such that it wets the processed end section (S) of the rope (R).

10. A method according to any of the preceding claims, wherein in said molding one or more electrically conductive connectors (5) are at least partially embedded in the material of the rope end block (1).

11. A method for manufacturing a rope terminal arrangement (A) of an elevator, comprising providing a rope end block (1) on an end (E) of a coated rope (R) according to any of the preceding claims, and fixing the end (E) of the coated rope (R) to a fixing base (50,60,70) with a fixing means (h,10,20).

12. A method according to any of the preceding claims, wherein the method further comprises providing an electrical device (80), such as a condition monitoring device (80), and connecting it to an electrical circuit (c) formed at least partially by one or more of said load bearing members (2) and one or more electrically conductive connectors (5) embedded in the rope end block (1).

13. A method according to any of the preceding claims, wherein said fixing means (h,10,20) comprise two compression members (10,20) having compression faces (11,21) delimiting a rope gap (G) between them, the compression members (10,20) being arranged to compress via said compression faces (11,21) a rope (R) placed in the rope gap (G) for blocking movement of the rope (R) in its longitudinal direction relative to the compression members (10,20).

14. A method according to any of the preceding claims, wherein the rope end block (1) is arranged to form an obstacle or at least a part of an obstacle against slipping of the rope end (E) through the rope gap (G).

15. A method according to any of the preceding claims, wherein said fixing comprises placing the rope (R) in the rope gap (G) such that the rope end block (1) is positioned on the end face (7) side of the elevator rope (R) with respect to the compression members (10,20).

16. A rope terminal arrangement (A) of an elevator, comprising
an end (E) of a coated rope (R) comprising one or more elongated load bearing members (2) embedded in a coating (3), the rope (R) comprising an end section (S), and a main section (M), the main section (M) forming the majority of the length of the rope (R), and the end section (S) having either no material of the coating (3) around said one or more load bearing members (2) or at least substantially smaller thickness of material of the coating (3) around said one or more load bearing members (2) than the main section (M);
and a rope end block (1) molded around the end section (S) of the rope (R); and
a fixing means (h,10,20) fixing the end (E) of the rope (R) to a fixing base (50,60,70).

17. An elevator, which comprises a rope terminal arrangement (A) as defined in claim 16 fixing an end (E) of a coated rope (R) of the elevator to a fixing base (50,60,70).
